# EUROPEAN PATENT SPECIFICATION

(11) **EP 2 709 351 B1**
(45) Date of publication and mention of the grant of the patent: **08.11.2017**
(21) Application number: 13171538.5
(22) Date of filing: 11.06.2013
(51) Int. Cl.: H04N 5/232

(54) **Imaging apparatus, and control method thereof**
Abbildungsvorrichtung und Steuerverfahren dafür
Appareil d'imagerie et son procédé de contrôle

(30) Priority: 13.06.2012 JP 2012133791
(43) Date of publication of application: 19.03.2014
(73) Proprietor: Ricoh Company, Ltd., Tokyo 143-8555 (JP)
(72) Inventor: Morihisa, Taijiroh, Tokyo 143-8555 (JP)
(74) Representative: J A Kemp

(56) References cited:
- EP-A2- 2 048 877
- US-A1- 2010 149 402

## Description

The present invention relates to an imaging apparatus, and a control method thereof. In particular, the present invention relates to an imaging apparatus that performs fine adjustment of focus by performing a manual focus operation after performing an auto focus operation, and a control method thereof.

In an electronic still camera as an embodiment of an imaging apparatus, generally, a through-the-lens image (live view image) is displayed, and confirmation of a photographing range, white balance, exposure, a focusing state, and the like for photographing a still image is performed by a user.

Additionally, regarding focus adjustment, an electronic still camera is known that includes a focus ring for focus operation in a lens barrel, and in which after performing an auto focus (AF) operation by half-pressing a shutter button, fine adjustment of detailed focus is performed by a manual focus (MF) operation by a user while half-pressing the shutter button. In such an electronic still camera, for example, it is possible for a user to half-press a shutter button with one hand, and perform focus adjustment by operating a focus ring with the other hand while viewing a monitor screen on which a through-the-lens image is displayed.

However, in a case where a user performs focus adjustment manually (manual focus operation), since resolution of a through-the-lens image is low in general, there is a problem in that it is difficult to confirm a focusing state sufficiently, and to perform focus adjustment (also referred to as focusing) accurately.

To solve such a problem, Japanese Patent Application Publication number 2007-28380 discloses an imaging apparatus that assists a focus adjustment operation by coloring each pixel along a contour line of a photographic subject in an image for focus adjustment with a predetermined color, and changing types and contrasting density of colors in accordance with clarity of the contour.

Additionally, Japanese Patent Application Publication number 2009-272837 discloses an imaging apparatus that makes it easy to confirm a focusing state by coloring each pixel along a contour line of a photographic subject in an image for focus adjustment with a predetermined color when operation of a focus ring is performed.

US-2010/149402 discloses an imaging apparatus in which after automatic focusing, if the user operates a manual focusing unit then an enlarged area of the image is displayed to aid user manual focus.

EP2,048,877 discloses a focusing method for high-speed video cameras, in which different colors and luminances are overlaid onto an image to represent which areas are in focus.

However, as disclosed above, in the imaging apparatuses that color along a contour line of a through-the-lens image, change contrasting density of color in accordance with clarity of the contour line, and display it, and display only a contour part of a photographic subject, it is necessary for a user to switch a display mode that makes it easy to perform focus adjustment manually in accordance with a photographic subject. And even in a case of switching the display mode automatically, it is only switched based on whether it is a close distance or there is a person, but not directly confirmed whether it is a photographic subject that makes it easy to perform focus adjustment by a manual focus operation or not, and therefore, there still is a problem in that it is difficult to perform focus adjustment accurately when a user performs manual focus operation.

Accordingly, an object of the present invention is to provide an imaging apparatus that performs fine adjustment of focus by performing a manual focus operation while confirming a through-the-lens image by a user after performing an auto focus operation, and switches a display mode of a through-the-lens image that is displayed by a tendency of contrast obtained by an auto focus operation performed immediately before, and a control method of the imaging apparatus.

In order to achieve the above object, an embodiment of the present invention provides a control method of an imaging apparatus, including: an imager configured to photoelectrically-convert an image of a photographic subject imaged by an imaging optical system and outputs image data; a display device configured to display a through-the-lens image; a filtering processor that extracts a high-frequency component from brightness data in the image data, and outputs edge signal data; a binarization processor configured to binarize the edge signal data; and a combiner configured to combine the binarized edge signal data and brightness data and color difference data in the image data, the control method comprising: performing a display operation in which based on contrast information obtained from the image data, a first display in which binarized edge signal data is displayed, and a second display in which combined image data is displayed, wherein in the display operation, based on the contrast information, in a case where it is determined to be a low contrast, the first display is performed, and in a case where it is determined to be a high contrast, the second display is performed.

In the accompanying drawings, which depict exemplary embodiments:
FIG. 1 is a top view that illustrates a configuration of a digital camera as an imaging apparatus according to an embodiment of the present invention.
FIG. 2 is a front view that illustrates the configuration of the digital camera.
FIG. 3 is a rear view that illustrates the configuration of the digital camera.
FIG. 4 is a block diagram that illustrates a system configuration of the digital camera.
FIG. 5 is a block diagram that illustrates a constitution of a processing system regarding display of a through-the-lens image in a monitoring operation in the digital camera.
FIG. 6 is image data per signal-processing step in a CCD signal-processing block of FIG. 5, and brightness (Y) data outputted from an image conversion processor.
FIG. 7 is image data per signal-processing step in the CCD signal-processing block of FIG. 5, and edge signal data outputted from a HPF processor.
FIG. 8 is image data per signal-processing step in the CCD signal-processing block of FIG. 5, and image information (binarized edge signal image data) that is outputted from a level conversion processor, partially replaced with only edge signal data and combined, and displayed by a display device.
FIG. 9 is image data per signal-processing step in the CCD signal-processing block of FIG. 5, and image information (combined image data) that is outputted from the level conversion processor, partially combined with an original image and displayed by the display device.
FIG. 10 is a flow diagram that illustrates through-the-lens image display control.
FIG. 11A is a graph that illustrates a waveform of a contrast value in a contrast determination operation, and an example of a high contrast. FIG. 11B is a graph that illustrates a waveform of a contrast value in the contrast determination operation, and an example of a low contrast.

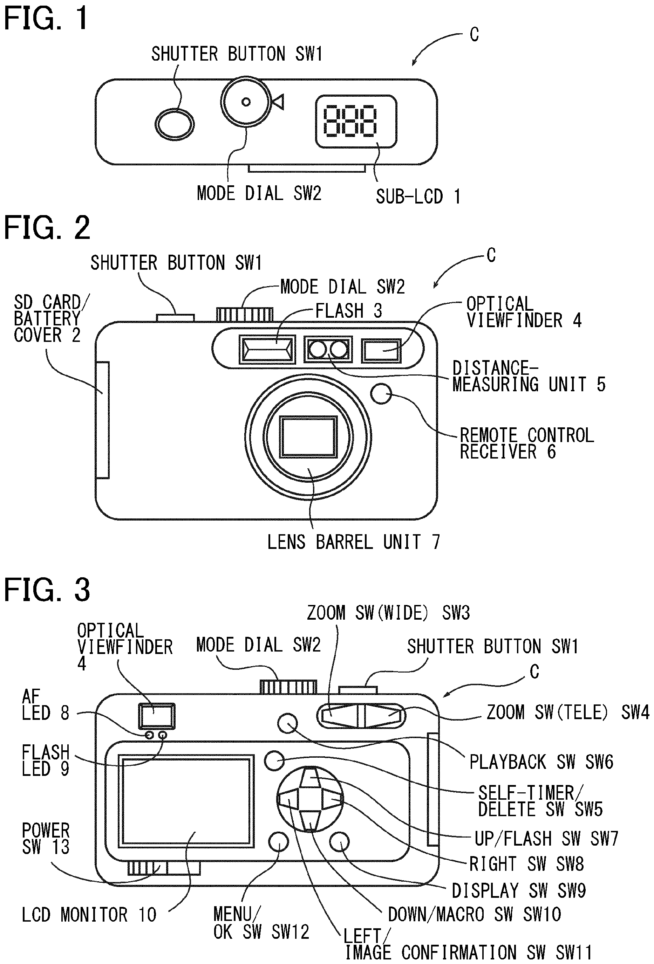

Hereinafter, a configuration according to an embodiment of the present invention will be explained in detail with reference to FIGs. 1 to 11B.

An imaging apparatus according to an embodiment of the present invention includes an imager (CCD 101, F/E-IC 102) that photoelectrically-converts an image of a photographic subject imaged by an imaging optical system (lens barrel unit 7, focus optical system 7-2a) and outputs image data, a display device (LCD monitor 10, LCD driver 117, TV signal display block 104-9) that displays a through-the-lens image, a filtering processor (HPF processor 104-2b) that extracts a high-frequency component from brightness data in the image data, and outputs edge signal data, a binarization processor (level conversion processor 104-2c) that binarizes the edge signal data, a combiner (combining processor 104-2d) that combines the binarized edge signal data and brightness data and color difference data in the image data, and a display controller (CPU block 104-3) that performs a first display in which the through-the-lens image is displayed based on the binarized edge signal data on the display device, and performs a second display in which the through-the-lens image is displayed based on the combined image data on the display device. The display controller switches the first display and the second display based on contrast information (contrast value obtainer 105) obtained from the image data. Note that reference signs and application examples in the embodiment are denoted in brackets.

### (Configuration of Imaging Apparatus)

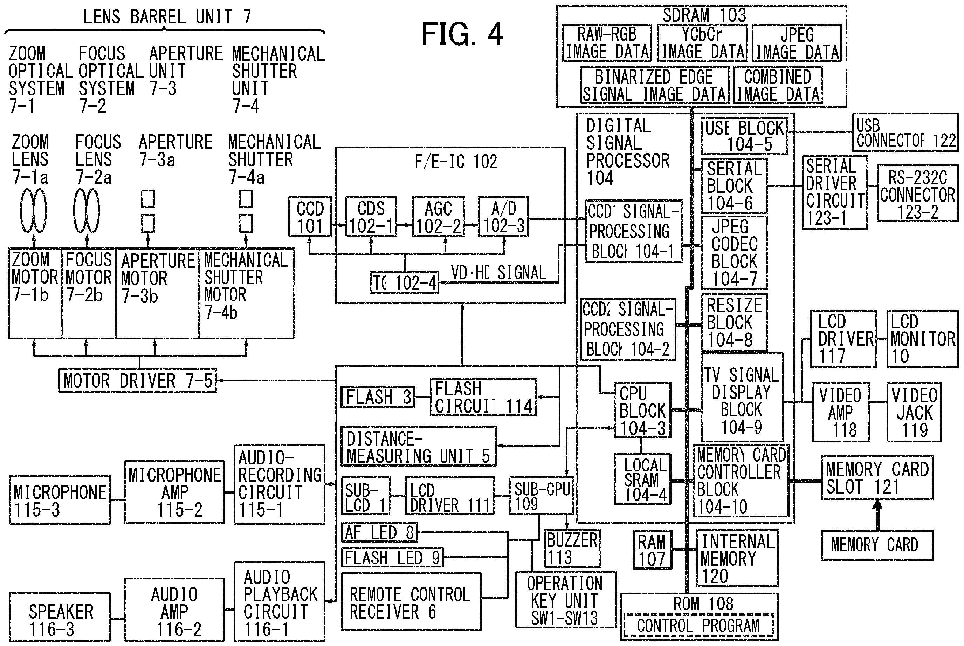

FIGs. 1 to 3 are exterior diagrams that illustrate a digital camera (electronic still camera) as an imaging apparatus according to an embodiment of the present invention. FIG. 1 illustrates a top view of the digital camera, FIG. 2 is a front view of the digital camera, and FIG. 3 is a back view of the digital camera. And FIG. 4 is a block diagram that illustrates a system configuration inside the digital camera.

In FIG. 1, reference sign C denotes a digital camera as an imaging apparatus. On a top portion of the digital camera C, a sub-liquid crystal display (sub-LCD) 1 (hereinafter, liquid crystal display is referred to as LCD), a shutter button SW1, a mode dial SW2 are provided. As illustrated in FIG. 2, on a side portion of the digital camera C, an SD card (memory card)/battery chamber cover (battery cover) 2 is provided, and on a front surface side of the digital camera C, a flash 3, an optical viewfinder 4, a distance-measuring unit 5, a remote control receiver 6, a lens barrel unit 7 including a photographing lens are provided.

In addition, as illustrated in FIG. 3, on a back surface of the digital camera C, the optical viewfinder 4, an LED (Light-Emitting Diode) for AF (AF LED) 8, an LED for flash (flash LED) 9, an LCD monitor 10, a wide-angle zoom switch (ZOOM SW (WIDE)) SW3, a telephoto zoom switch (ZOOM SW (TELE)) SW4, a self-timer setting/cancel switch (self-timer/delete SW) SW5, a playback switch (playback SW) SW6, an up movement/flash setting switch (up/flash SW) SW7, a right movement switch (right SW) SW8, a display switch (display SW) SW9, a down movement/macro setting switch (down/macro SW) SW10, a left movement/image confirmation switch (left/image confirmation SW) SW11, a menu/OK switch (MENU/OK SW) SW12, a power switch (power SW) SW13 are provided. Each of the switches SW1 to SW13 is included in an operation key unit.

In FIG. 4, reference sign 104 denotes a digital signal processor (hereinafter, referred to as a processor). The processor 104 includes a CPU (Central Processing Unit), and each part of the digital camera C is controlled by the processor 104.

The lens barrel unit 7 includes a zoom optical system 7-1, a focus optical system 7-2, an aperture unit 7-3, and a mechanical shutter unit 7-4. The zoom optical system 7-1 includes a zoom lens 7-1a that captures an optical image of a photographic subject. The focus optical system 7-2 includes a focus lens 7-2a that images on a light-receiving part of a CCD (Charge-Coupled Device) 101 as a solid-state image sensor in order to photoelectrically-convert an optical image of a photographic subject. The aperture unit 7-3 includes an aperture 7-3a. The mechanical shutter unit 7-4 includes a mechanical shutter 7-4a.

The zoom optical system 7-1, the focus optical system 7-2, the aperture unit 7-3, and the mechanical shutter unit 7-4 are driven by a zoom motor 7-1b, a focus motor 7-2b, an aperture motor 7-3b, and a mechanical shutter motor 7-4b, respectively.

Additionally, each of the motors 7-1b, 7-2b, 7-3b, 7-4b is driven by a motor driver 7-5. The motor driver 7-5 is drive-controlled by a drive command from a CPU block 104-3 of the processor 104 based on an input of the remote control receiver 6 or an operation input of the operation key unit SW1 to SW13.

An image of a photographic subject imaged on a light-receiving part of the CCD 101 by each of the optical systems 7-1, 7-2 of the lens barrel unit 7 is converted to an image signal by the CCD 101, and the image signal is outputted to an F/E-IC (Front/End-IC) 102.

The F/E-IC 102 includes a CDS (Correlated Double Sampler) 102-1, an AGC (Automatic Gain Control) 102-2, and an A/D (Analog/Digital Convertor) 102-3. The CDS 102-1 performs correlated double sampling for image noise reduction. The AGC 102-2 performs gain adjustment automatically. The A/D 102-3 converts an analog image signal outputted from the AGC 102-2 to a digital image signal.

The F/E-IC 102 performs predetermined processings such as noise reduction, gain adjustment, and the like on an analog image signal outputted from the CCD 101, and additionally converts the analog image signal to a digital image signal, and then outputs it to a CCD1 signal-processing block 104-1 of the processor 104.

Timing processing such as image signal sampling by the F/E-IC 102, or the like is performed by a TG (Timing Generator) 102-4 based on a vertical synchronization signal (hereinafter, referred to as VD signal), and a horizontal synchronization signal (hereinafter, referred to as HD signal) fed back from the CCD1 signal-processing block 104-1 of the processor 104.

The processor 104 includes the CCD1 signal-processing block 104-1, a CCD2 signal-processing block 104-2, a CPU block 104-3, a local SRAM 104-4, a USB block 104-5, a serial block 104-6, a JPEG CODEC block 104-7, a resize block 104-8, a TV signal display block 104-9, and a memory card controller block 104-10. The CCD1 signal-processing block 104-1 performs white balance setting and gamma setting on output data of the F/ E-IC 102 from the CCD 101, and provides the VD signal and the HD signal as described above. The CCD2 signal-processing block 104-2 performs conversion to brightness data (Y), and color difference data (CbCr) by filtering, and performs predetermined signal processing. The CPU block 104-3 controls operation of each part of the apparatus. The local SRAM 104-4 temporarily stores data necessary for control, and the like. The USB block 104-5 performs USB communication with an external device such as a personal computer, or the like. The serial block 104-6 performs serial communication with an external device such as a personal computer, or the like. The JPEG CODEC block 104-7 performs JPEG compression and decompression. The resize block 104-8 enlarges and reduces a size of image data by interpolation processing. The TV signal display block 104-9 is a video signal output block that performs conversion to a video signal to display image data on an LCD monitor, or an external display device such as a TV, or the like. The memory card controller block 104-10 performs control of a memory card that stores photographed image data. Each of those blocks 104-1 to 104-10 is connected to each other via a bus line.

Outside the processor 104, a ROM (Read Only Memory) 108, and an internal memory 120 are provided. The ROM 108 stores a control program written by a readable code in an SDRAM 103, a RAM 107, and the CPU block 104-3, a parameter for control, and the like. The internal memory 120 stores image data of a photographed image. Those are also connected to the processor 104 via a bus line.

The SDRAM 103 temporarily stores image data when various processings are performed on image data in the processor 104. The stored image data are, for example, RAW-RGB image data, YCbCr image data, JPEG image data, binarized edge signal image data, combined image data, and the like. The RAW-RGB image data is image data that is in a state where white balance setting and gamma setting are performed in the CCD1 signal-processing block 104-1 after receiving image data via the F/E-IC 102 from the CCD 101. The YCbCr image data is image data that is in a state where conversion to brightness data and color difference data is performed in the CCD2 signal-processing block 104-2. The JPEG image data is image data that is in a state where JPEG compression is performed in the JPEG CODEC block 104-7. The binarized edge signal image data is image data that is obtained based on brightness data in the CCD2 signal-processing block 104-2. The combined image data is image data that is obtained to combine YCbCr image data and binarized edge signal image data in the CCD2 signal-processing block 104-2.

When the power switch SW13 is turned on, a control program stored in the ROM 108 is loaded to a memory of the processor 104, and the CPU block 104-3 controls operation of each part of the digital camera C in accordance with the control program, and temporarily stores data necessary for control, and the like in the RAM 107 and the local SRAM 104-4. And a rewritable flash ROM is used as the ROM 108, which makes it possible to change a control program and a parameter for control, and makes it easy to perform function update.

When a control program is executed, a memory of the RAM 107 is used as a working memory of the control program, and therefore, in the memory of the RAM 107, writing and reading of control data, a parameter, and the like of the control program are performed as needed. All the processings described later are performed mainly by the processor 104 by executing the control program.

Additionally, the CPU block 104-3 is connected to an audio-recording circuit 115-1, an audio playback circuit 116-1, a flash circuit 114, a distance-measuring unit 5, and a sub-CPU 109. The flash circuit 114 lights the flash 3. The distance-measuring unit 5 measures a distance to a photographic subject. Those circuits are controlled by the CPU block 104-3.

An audio signal captured by a microphone 115-3 is amplified by a microphone amplifier (microphone AMP) 115-2, converted to a digital signal by the audio-recording circuit 115-1, and stored in a memory card in accordance with a control command of the CPU block 104-3.

The audio playback circuit 116-1 converts appropriate audio data stored in the ROM 108 to an audio signal in accordance with a control command of the CPU block 104-3. The sound signal is amplified by an audio amplifier (audio AMP) 116-2, and outputted from a speaker 116-3.

The sub-CPU 109 is a CPU where a ROM, and a RAM are included in one chip. To the sub-CPU 109, via an LCD driver 111, the sub-LCD 1 is connected, and the remote control receiver 6, the LED for AF 8, the LED for flash 9, the operation key unit of the switches SW1 to SW13, a buzzer 113 are connected. Those are controlled by the sub-CPU 109. Additionally, the sub-CPU 109 outputs an output signal of the operation key unit SW1 to SW13 and the remote control receiver 6 as operation information by a user to the CPU block 104-3, and converts a camera state outputted from the CPU block 104-3 to a control signal of the sub-LCD 1, the LED for AF 8, the LED for flash 9, and the buzzer 113 and outputs it.

The sub-LCD 1 is a display that displays, for example, the number of photographable images, or the like. The LCD driver 111 is a drive circuit that drives the sub-LCD 1 by an output signal of the sub-CPU 109.

The LED for AF 8 is an LED that indicates a focusing state when photographing. The LED for flash 9 is an LED that indicates a state of charge of the flash 3. The LED for AF 8 and the LED for flash 9 can be used for other indications such as indication of accessing a memory card, and the like.

The operation key unit SW1 to SW13 is a key circuit operated by a user. The remote control receiver 6 is a receiver of a signal of a remote control transmitter operated by a user.

The USB block 104-5 of the processor 104 is connected to a USB connector 122 for USB connection to an external device such as a personal computer, or the like. The serial block 104-6 of the processor 104 is connected to an RS-232C connector via a serial driver circuit 123-1 which is a circuit that converts an output signal of the serial block 104-6 to a voltage. By those USB block 104-5, and the serial block 104-6, data communication is performed between the digital camera C and an external device connected to the digital camera C.

To the TV signal display block 104-9 of the processor 104, an LCD driver 117 which is a drive circuit that drives the LCD monitor 10, and has a function that converts a video signal outputted from the TV signal display block 104-9 to a signal to be displayed on the LCD monitor 10, and a video amplifier (video AMP) 118 that amplifies a video signal (TV signal) and performs 75Ω impedance adjustment are connected. To the LCD driver 117, and the video amplifier 118, the LCD monitor 10, and a video jack 119 that connects to an external monitor device such a TV, or the like are connected, respectively.

The TV signal display block 104-9 converts image data to a video signal, and outputs it to the LCD monitor 10, or an external monitor device connected to the video jack 119. The LCD monitor 10 is used for monitoring a photographic subject while photographing, displaying a through-the-lens image, displaying a photographed image, displaying an image stored in the memory card or the internal memory 120, and the like.

To the memory card controller block 104-10, a memory card slot 121 is connected. The memory card controller block 104-10 performs exchange of image data between a memory card for additional memory inserted in the memory card slot 121 and the digital camera C.

### (Operation of Imaging Apparatus)

Next, an overview of operation of the digital camera C will be explained. As operation modes of the digital camera C, there are a photographing mode that is used when photographing, and a playback mode that is used when playing back a photographed image. Additionally, the photographing mode further includes an AF mode in which auto focus control is performed with respect to the focus optical system 7-2, and a MF mode in which focus adjustment is performed with respect to the focus optical system 7-2 manually.

Additionally, operation modes such as a self-timer mode in which photographing is performed by use of a self-timer, a remote control mode in which the digital camera C is remotely operated by a remote controller, and the like are prepared for operation in the photographing mode.

In a state where the power switch SW13 of the digital camera C is turned on, when the mode dial SW2 is set to the photographing mode, the digital camera C is in the photographing mode, and when the mode dial SW2 is set to the playback mode, the digital camera C is in the playback mode. In particular, the following steps are performed.

(Step S11) Firstly, when the power switch SW13 of the digital camera C is turned on, determination of an operation mode is performed. That is, a state of the mode dial SW2 is determined as to whether it is in the photographing mode, or in the playback mode. When it is in the photographing mode, operation proceeds to Step S12, and when it is in the playback mode, operation proceeds to Step S21.

### [Photographing Mode]

(Step S12) The motor driver 7-5 is controlled by the processor 104, and the lens barrel included in the lens barrel unit 7 is moved to a photographable position. Additionally, power is applied to each circuit necessary for photographing such as the CCD 101, the F/E-IC 102, the LCD monitor 10, and the like.

(Step S13) And, information of an image of a photographic subject imaged on the light-receiving part of the CCD 101 by each of the optical systems 7-1, 7-2 is converted to an RGB analog signal by the CCD 101 as needed, and on the RGB analog signal, predetermined processings such as noise reduction, gain adjustment, and the like are performed by the CDS circuit 102-1, and the AGC 102-2, and the RGB analog signal is converted to an RGB digital signal by the A/D 102-3, and then outputted to the CCD1 signal-processing block 104-1 of the processor 104.

(Step S14) Additionally, the RGB digital signal is converted to RAW-RGB image data, YCbCr image data, binarized edge signal image data, combined image data, and JPEG image data by signal processing of the CCD1 signal-processing block 104-1 and the CCD2 signal-processing block 104-2, and those are written in a frame memory of the SDRAM 103 by a memory controller (not illustrated).

(Step S15) The binarized edge signal image data, or the combined image data of those image data is read out from the frame memory of the SDRAM 103 as needed, converted to a video signal by the TV signal display block 104-9, and outputted as a through-the-lens image to the LCD monitor 10, or an external device such as the TV, or the like. As described above, operation in which in a photographing standby state, image data of an image of a photographic subject is inputted to the frame memory of the SDRAM 103 as needed, and the image of the photographic subject (through-the-lens image) is outputted to the LCD monitor 10, or the external device such as the TV, or the like as needed is referred to as a monitoring operation.

(Step S16) Next, a state of the shutter button SW1 is determined. When the shutter button SW1 is not pressed, the operation returns to Step S12. When the shutter button SW1 is pressed, an operation in which image data (JPEG image data) of the photographic subject inputted in the frame memory of the SDRAM at this time is stored to the internal memory 20, or the memory card, or the like is executed, and then the operation returns to Step S12. The operation in this step is referred to as a photographing operation.

When the digital camera C is operated in the photographing mode as described above, the operation from Step S12 to Step S16 is repeated. A state where this repeated operation is performed is referred to as a viewfinder mode, and the operation is repeated in a predetermined period (for example, in a 1/30-second period). In the viewfinder mode, the monitoring operation is also repeatedly performed in the 1/30-second period, and therefore, along with this, display of the LCD monitor 10 or the external device is refreshed.

### [Playback Mode]

(Step S21) The image data stored in the internal memory 120 or the memory card is outputted to the LCD monitor 10 or the external monitor device such as the TV, or the like.

(Step S22) Then, it is determined whether setting of the mode dial SW2 is changed or not. When the setting of the mode dial SW2 is changed, the operation returns to Step S11. When the setting of the mode dial SW2 is not changed, the operation returns to Step S21.

Here, in a case of the monitoring operation in the photographing mode described above, a user confirms a focusing state with respect to a photographic subject by viewing a through-the-lens image displayed on the LCD monitor 10; however, when the photographic subject is out of focus in the through-the-lens image, in both of cases in the AF mode and the MF mode, operation in which a position of the focus lens 7-2a in the lens barrel unit 7 is adjusted so as to focus on the photographic subject by viewing the through-the-lens image displayed on the LCD monitor 10 and pressing the up/flash switch SW7, or the down/macro switch SW10 is performed .

### (Through-The-lens Image display Control)

The digital camera C executes the following through-the-lens image control. That is, image data captured from the imager is divided into brightness data and color difference data after performing white balance processing, color interpolation processing, and so on. And with respect to only the brightness data, in order to extract a high-frequency component, high-pass filtering processing is performed, and an edge signal is outputted. Then binarization processing is performed in accordance with an edge level of the edge signal. Thus, only a part in which the edge level is high is extracted. That is, only a contour line that is in focus is extracted. To the edge signal, original brightness data and color difference data are added, which is displayed as a through-the-lens image. And therefore, it is possible to confirm a focusing state with respect to a displayed image. Additionally, in a case where the edge signal of the brightness data is replaced with corresponding original brightness data and color difference data, and displayed as a through-the-lens image, color difference data is not included, and only a highlighted edge part is displayed, and therefore, it is possible to confirm a focusing state with respect to the displayed image.

Accordingly, whether to perform display of a highlighted contour line only or display of a highlighted contour as described above is switched based on contrast information (for example, a contrast value, an AF evaluation value) obtained from the auto focus operation immediately before. In other words, display of the through-the-lens image of the high-frequency component (contour part) is switched by use of contrast information of an image obtained by an auto focus operation.

In particular, for example, the magnitude of the contrast value is determined. In a case where it is determined to be a low contrast, only the edge signal is displayed (for example, only the contour line is displayed in white.), and this makes it possible to visually recognize detailed focus. In a case it is determined to be a high contrast, it is easy to perform focus adjustment by performing a manual focus operation even with respect to an image as it is, and therefore, the edge signal, original brightness data and color difference data are added, and the contour line is displayed on an original image. Details will be explained below.

### [Control Block]

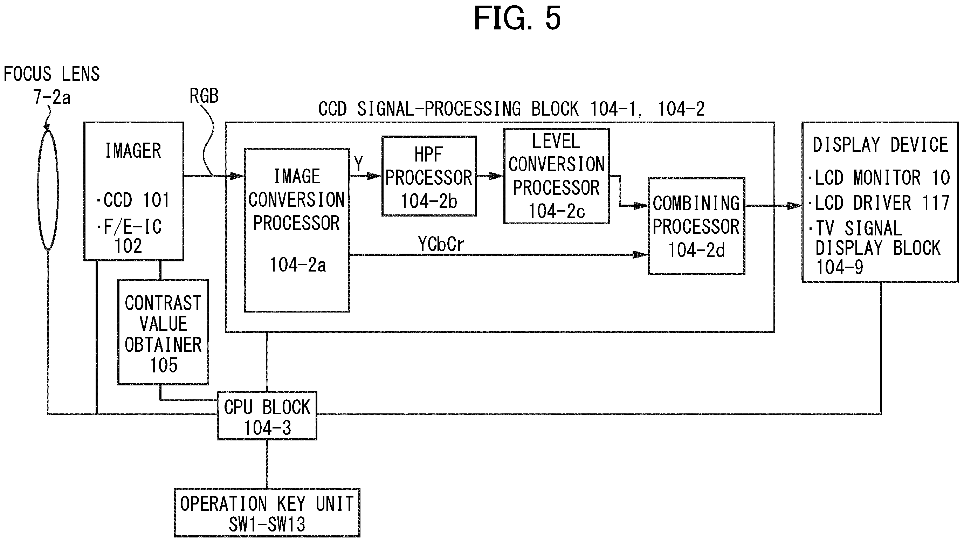

FIG. 5 is a block diagram that illustrates a configuration of a processing system regarding the display of the through-the-lens image in the monitoring operation in the digital camera C.

As illustrated in FIG. 5, the processing system regarding the display of the through-the-lens image in the monitoring operation in the digital camera C includes the focus lens 7-2a (focus optical system 7-2) in the imaging optical system (lens barrel unit 7), the imager (CCD 101, F/E-IC 102), a CCD signal-processing block (CCD1 signal-processing block 104-1, CCD2 signal-processing block 104-2), the display device (LCD monitor 10, LCD river 117, TV signal display block 104-9), a contrast value obtainer 105, the operation key unit (SW1 to SW13), and the display controller (CPU block 104-3). The imager photoelectrically-converts an imaged image of a photographic subject and outputs image data. The CCD signal-processing block has an image conversion processor 104-2a, a high-pass filter (HPF) processor 104-2b, a level conversion processor 104-2c, and a combining processor 104-2d, and processes a signal (RAW-RGB) outputted from the imager. The display device selectively displays a through-the-lens image based on image data obtained by the imager as explained below. The contrast value obtainer 105 obtains contrast information (contrast value) based on the image data obtained by the imager by moving the focus lens 7-2a. The operation key unit receives various operation instructions from a user. The display controller controls each part in accordance with the control program.

Here, the image conversion processor 104-2a has a part of a processing function of the CCD1 signal-processing block 104-1 and the CCD2 signal-processing block 104-2, and with respect to image data (RAW-RGB, RGB pixel in the Bayer array) transmitted from the imager (F/E-IC 102), after performing white balance processing, color interpolation processing, and the like, performs processing in which the image data is divided into brightness (Y) data and color difference (CbCr) data.

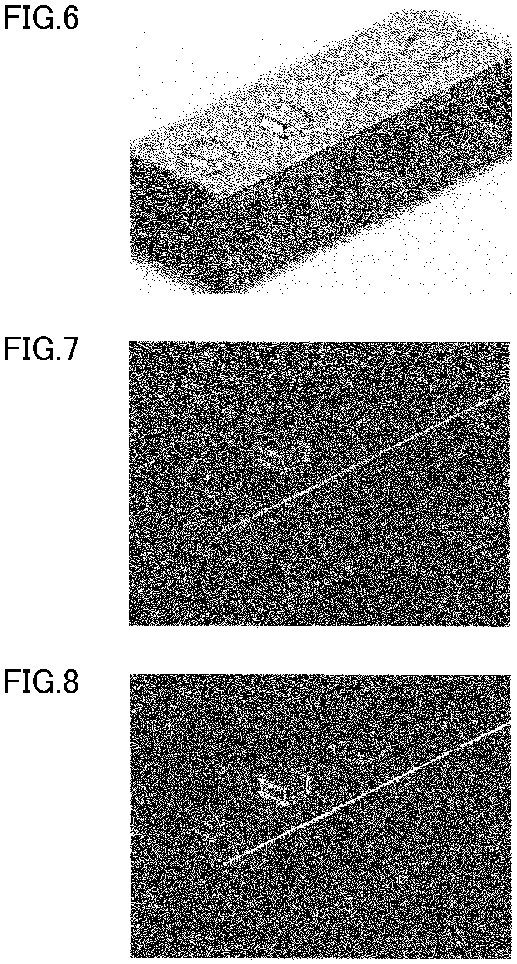

FIG. 6 illustrates an image diagram of brightness (Y) data. Here, an example is shown such that a photographic subject is a rectangular parallelepiped in which there are convex portions and openings on a surface, and is in a state where an approximately central part of the image is in focus, and the focus blurs gradually toward a peripheral part of the image. Additionally, a color difference signal Cb is a value that is obtained by multiplying (B signal - brightness Y signal) by a specific constant, and likewise, a color difference signal Cr is a value that is obtained by multiplying (R signal - brightness Y signal) by a specific constant. The image conversion processor 104-2a transmits brightness (Y) data to the HPF processor 104-2b, and transmits YCbCr image data to the combining processor 104-2d.

The HPF processor 104-2b performs high-pass filter processing that extracts a high-frequency component with respect to the brightness (Y) data transmitted from the image conversion processor 104-2a, and extracts an edge signal in which brightness (Y) drastically changes. FIG. 7 illustrates an image diagram of an edge signal obtained by performing the high-pass filter processing on the brightness (Y) data of FIG. 6. In the drawing, a white dot means an edge signal in which an edge level is rather high.

The level conversion processor 104-2c performs level conversion processing that performs binarization on the basis of a predetermined threshold value with respect to the edge signal transmitted from the HPF processor 104-2a, and outputs a binarized edge signal. Thus, only a part in which the edge level is high is extracted, and as a result, only a contour line in which a photo graphic subject is in focus is obtained. FIG. 8 illustrates an example in which the level conversion processing is performed on the edge signal of FIG. 7, and the obtained binarized edge signal image data (image information that is partially replace with only the edge signal, combined, and displayed on the display device) is displayed on the display device.

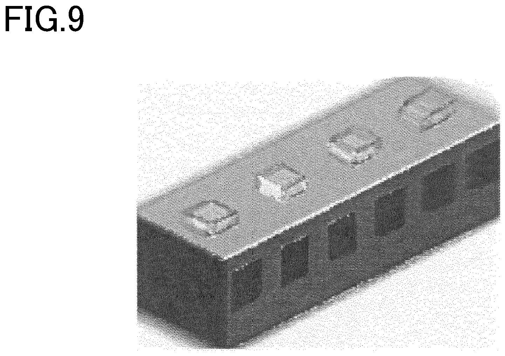

The combining processor 104-2d performs combining processing that superimposes binarized edge signal image data and YCbCr image data, that is, performs processing in which original brightness (Y) data and color difference (CbCr) data are added to a binarized edge signal, and outputs the combined image data to the display device (FIG. 9, second display). This is image data in which a contour line is displayed in an YCbCr image. Alternatively, the combining processor 104-2d does not perform the combining processing, and outputs binarized edge signal image data to the display device (FIG. 8, first display).

### [Control Flow]

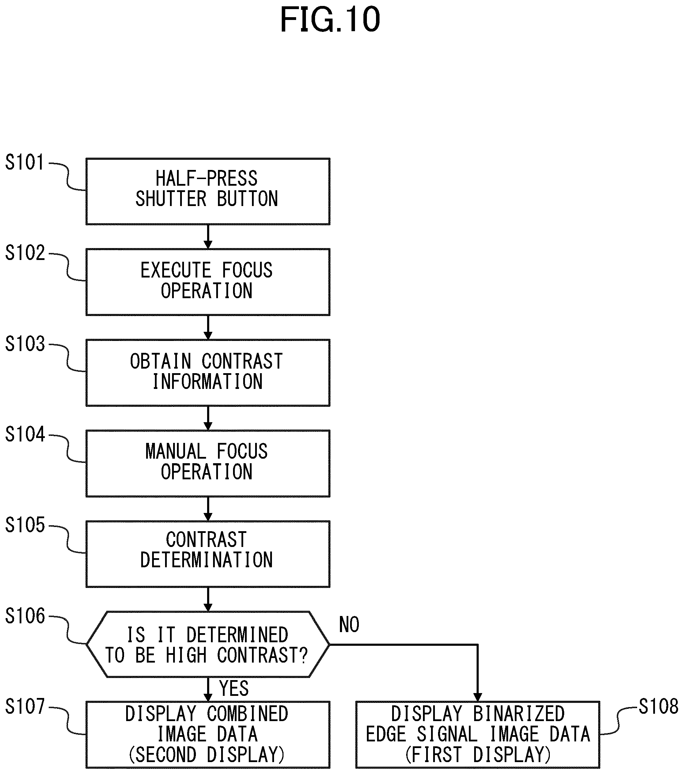

In the processing system of FIG. 5, the CPU block 104-3 as the display controller performs the following signal processing control for the display of the through-the-lens image. With reference to a flow diagram of FIG. 10, it will be explained.

When the shutter button SW1 is half-pressed (Step S101), a focus operation (AF operation) is executed (Step S102).

While executing the focus operation, as described above, the contrast value obtainer 105 consecutively obtains a contrast value from an image obtained by the imager (CCD 101) (Step S103).

After finishing the focus operation, when a user issues a manual focus command (Step S104), contrast determination is performed (Step S105).

In the contrast determination, in a case where it is determined to be a low contrast (Step S106: NO), binarized edge signal image data that makes it easy to visually recognize the focus in detail when performing manual focus is displayed as a through-the-lens image on the LCD monitor 10 (Step S108: first display, FIG. 8).

On the other hand, in a case where it is determined to be a high contrast (Step S106: YES), even with respect to an image as it is, it is easy to perform the focus adjustment by performing a manual focus operation, and therefore, combined image data in which processing that adds original brightness (Y) data and color difference (CbCr) data to a binarized edge signal is performed is displayed as a through-the-lens image on the LCD monitor 10 (Step S107: second display, FIG. 9).

### [Contrast Determination]

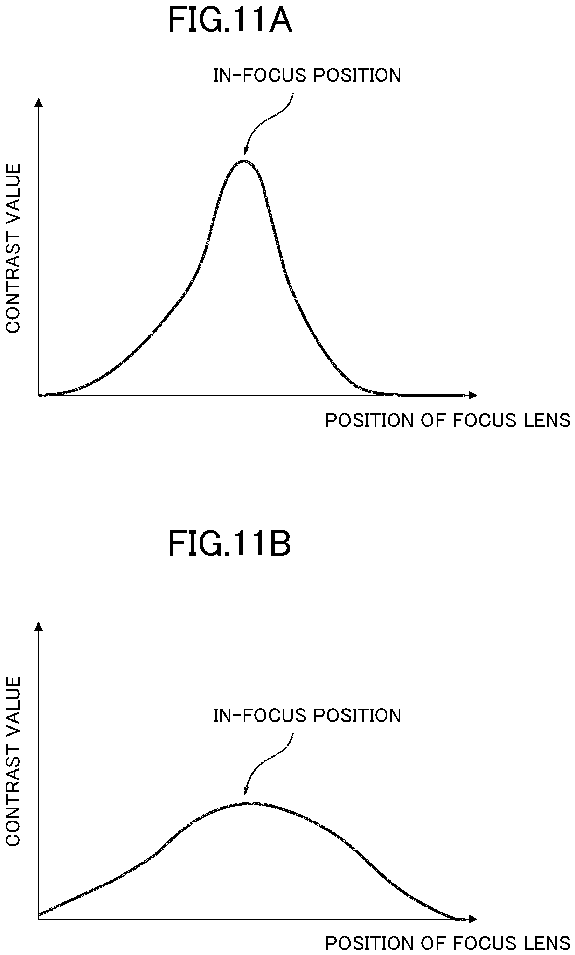

A specific example of the contrast determination will be explained with reference to FIGs. 11A, and 11B. A contrast value is a value that is calculated from a difference in brightness in an image, and is most generally used as an index of in-focus determination when performing an auto focus operation (also referred to as AF evaluation value).

The contrast value becomes a highest value in a position where a photographic subject exists when moving a position of the focus lens. However, depending on the degree of contrast, as illustrated in each of FIGs. 11A and 11B, the height and the steepness of waveforms of graphs, which show a relationship between the position of the focus lens and the contrast value, are different (tendency of contrast).

In the present embodiment, the contrast determination is performed based on comparison of the magnitude (absolute value) of the contrast value of a peak of a waveform. That is, in a case where contrast is high, the height of the peak of the waveform is high and steep, and in a case where contrast is low, the height of the waveform is low and gentle.

Based on the above, in the contrast determination, whether the contrast value of the peak of the waveform is higher than an arbitrary threshold value that is set or not is determined. In a case where the contrast value is higher than the threshold value, it is determined to be a high contrast (FIG. 11A), and in a case where the contrast value is lower than the threshold value, and there is no peak of the waveform in which the contrast value is large, it is determined to be a low contrast (FIG. 11B).

Note that in addition to the magnitude of the contrast value of the peak of the waveform, a derivative value of the contrast value is calculated, and the contrast determination is also made by the steepness of the waveform. In this case, in a case where the derivative value is larger than the threshold value, it is determined to be the high contrast, and in a case where the derivative value is smaller than the threshold value, it is determined to be the low contrast.

As described above, according to an embodiment of the present invention, in an imaging apparatus in which a through-the-lens image is confirmed by a user after performing an auto focus operation and fine adjustment of focus is performed by a manual focus operation, in accordance with a tendency of contrast obtained by an auto focus operation performed immediately before, by switching a display type of a displayed through-the-lens image, it is possible for the user to easily perform the fine adjustment of the focus by the manual focus operation.

According to an embodiment of the present invention, in an imaging apparatus in which a through-the-lens image is confirmed by a user after performing an auto focus operation and fine adjustment of focus is performed by a manual focus operation, in accordance with a tendency of contrast obtained by an auto focus operation performed immediately before, by switching a display type of a displayed through-the-lens image, it is possible for the user to easily perform the fine adjustment of the focus by the manual focus operation.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An imaging apparatus (C), comprising:
an imager (101, 102) configured to photoelectrically-convert an image of a photographic subject imaged by an imaging optical system (7, 7-2a) and output image data;
a display device (10, 117, 104-9) configured to display a through-the-lens image;
a filtering processor (104-2b) configured to extract a high-frequency component from brightness data in the image data, and output edge signal data; the imaging apparatus **characterised in that** it further comprises: a binarization processor (104-2c) configured to binarize the edge signal data;
a combining processor (104-2d) configured to combine the binarized edge signal data with brightness and color difference data from the image data; and
a display controller (104-3) configured to perform a first display in which said binarized edge signal data is displayed on the display device, and configured to perform a second display in which said combined image data is displayed on the display device, wherein the display controller is further configured to obtain a contrast information from the image data and, based on said contrast information, is adapted to perform the first display in a case where it is determined to be a low contrast, and to perform the second display in a case where it is determined to be a high contrast.

2. The imaging apparatus according to Claim 1, wherein the display controller obtains the contrast information from the image data while performing an auto focus operation, and switches between the first display and the second display based on the obtained contrast information while performing a manual focus operation after performing the auto focus operation.

3. The imaging apparatus according to any one of Claims 1 to 2, wherein the contrast information is a contrast value, and the display controller performs the first display in a case where a peak of a waveform, which shows the contrast value, is lower than a predetermined value, and in a case where the peak of the waveform is higher than the predetermined value, performs the second display.

4. The imaging apparatus according any one of Claims 1 to 2, wherein the contrast information is a contrast value, and the display controller performs the first display in a case where steepness of a waveform, which shows the contrast value, is lower than a predetermined value, and in a case where the steepness of the waveform is higher than the predetermined value, performs the second display.

5. A control method of an imaging apparatus (C), including: an imager (101, 102) configured to photoelectrically-convert an image of a photographic subject imaged by an imaging optical system (7, 7-2a) and output image data; a display device (10, 117, 104-9) configured to display a through-the-lens image; a filtering processor (104-2b) configured to extract a high-frequency component from brightness data in the image data, and output edge signal data; a binarization processor (104-2c) configured to binarize the edge signal data; and a combining processor (104-2d) configured to combine the binarized edge signal data with brightness and color difference data from the image data, the control method being **characterised by** the step of performing a display operation comprising first display in which said binarized edge signal data is displayed, and a second display in which said combined image data is displayed, wherein, based on the contrast information, in a case where it is determined to be a low contrast, the first display is performed, and in a case where it is determined to be a high contrast, the second display is performed.

6. The control method according to Claim 5, wherein in the display operation, the contrast information is obtained from the image data while performing an auto focus operation, and the first display and the second display are switched based on the obtained contrast information while performing a manual focus operation after performing the auto focus operation.

## Patentansprüche

1. Bildgebende Einrichtung (C), die Folgendes umfasst:
einen Bildgeber (101, 102), der dazu ausgelegt ist, ein Bild eines Aufnahmeobjekts, das von einem bildgebenden Optiksystem (7, 7-2a) abgebildet wird, fotoelektrisch umzuwandeln und Bilddaten auszugeben;
eine Anzeigevorrichtung (10, 117, 104-9), die dazu ausgelegt ist, ein Durch-das-Objektiv-Bild anzuzeigen;
einen Filterprozessor (104-2b), der dazu ausgelegt ist, aus Helligkeitsdaten in den Bilddaten eine Hochfrequenzkomponente zu extrahieren und Kantensignaldaten auszugeben;
wobei die bildgebende Einrichtung **dadurch gekennzeichnet ist, dass** sie ferner Folgendes umfasst:
einen Binarisierungsprozessor (104-2c), der dazu ausgelegt ist, die Kantensignaldaten zu binarisieren;
einen Kombinationsprozessor (104-2d), der dazu ausgelegt ist, die binarisierten Kantensignaldaten mit Helligkeits- und Farbdifferenzdaten aus den Bilddaten zu kombinieren; und
eine Anzeigesteuerung (104-3), die dazu ausgelegt ist, eine erste Anzeige durchzuführen, bei der die binarisierten Kantensignaldaten auf der Anzeigevorrichtung angezeigt werden, und dazu ausgelegt, eine zweite Anzeige durchzuführen, bei der die kombinierten Bilddaten auf der Anzeigevorrichtung angezeigt werden, wobei die Anzeigesteuerung ferner dazu ausgelegt ist, Kontrastinformationen aus den Bilddaten zu erhalten, und auf Basis der Kontrastinformationen angepasst ist, die erste Anzeige in einem Fall durchzuführen, in dem ein schwacher Kontrast bestimmt wird, und die zweite Anzeige in einem Fall durchzuführen, in dem ein starker Kontrast bestimmt wird.

2. Bildgebende Einrichtung nach Anspruch 1, wobei die Anzeigesteuerung die Kontrastinformationen aus den Bilddaten erhält, während ein automatischer Fokussierungsvorgang durchgeführt wird, und zwischen der ersten Anzeige und der zweiten Anzeige auf Basis der erhaltenen Kontrastinformationen umschaltet, während nach der Durchführung des automatischen Fokussierungsvorgangs ein manueller Fokussierungsvorgang durchgeführt wird.

3. Bildgebende Einrichtung nach einem der Ansprüche 1 bis 2, wobei es sich bei den Kontrastinformationen um einen Kontrastwert handelt und die Anzeigesteuerung die erste Anzeige in einem Fall durchführt, in dem eine Spitze einer Wellenform, die den Kontrastwert anzeigt, niedriger ist als ein vorbestimmter Wert, und in einem Fall, in dem die Spitze der Wellenform höher ist als der vorbestimmte Wert, die zweite Anzeige durchführt.

4. Bildgebende Einrichtung nach einem der Ansprüche 1 bis 2, wobei es sich bei den Kontrastinformationen um einen Kontrastwert handelt und die Anzeigesteuerung die erste Anzeige in einem Fall durchführt, in dem eine Steilheit einer Wellenform, die den Kontrastwert anzeigt, niedriger ist als ein vorbestimmter Wert, und in einem Fall, in dem die Steilheit der Wellenform höher ist als der vorbestimmte Wert, die zweite Anzeige durchführt.

5. Steuerverfahren einer bildgebenden Einrichtung (C), die Folgendes beinhaltet: einen Bildgeber (101, 102), der dazu ausgelegt ist, ein Bild eines Aufnahmeobjekts, das von einem bildgebenden Optiksystem (7, 7-2a) abgebildet wird, fotoelektrisch umzuwandeln und Bilddaten auszugeben; eine Anzeigevorrichtung (10, 117, 104-9), die dazu ausgelegt ist, ein Durch-das-Objektiv-Bild anzuzeigen; einen Filterprozessor (104-2b), der dazu ausgelegt ist, aus den Helligkeitsdaten in den Bilddaten eine Hochfrequenzkomponente zu extrahieren und Kantensignaldaten auszugeben; einen Binarisierungsprozessor (104-2c), der dazu ausgelegt ist, die Kantensignaldaten zu binarisieren; und einen Kombinationsprozessor (104-2d), der dazu ausgelegt ist, die binarisierten Kantensignaldaten mit Helligkeits- und Farbdifferenzdaten aus den Bilddaten zu extrahieren,
wobei das Steuerverfahren **gekennzeichnet ist durch** den Schritt des Durchführens eines Anzeigevorgangs, der eine erste Anzeige umfasst, bei der die binarisierten Kantensignaldaten angezeigt werden, und eine zweite Anzeige, bei der die kombinierten Bilddaten angezeigt werden, wobei auf Basis der Kontrastinformationen in einem Fall, in dem ein schwacher Kontrast bestimmt wird, die erste Anzeige durchgeführt wird und in einem Fall, in dem ein starker Kontrast bestimmt wird, die zweite Anzeige durchgeführt wird.

6. Steuerverfahren nach Anspruch 5, wobei beim Anzeigevorgang die Kontrastinformationen aus den Bilddaten erhalten werden, während ein automatischer Fokussierungsvorgang durchgeführt wird, und zwischen der ersten Anzeige und der zweiten Anzeige auf Basis der erhaltenen Kontrastinformationen umgeschaltet wird, während nach der Durchführung des automatischen Fokussierungsvorgangs ein manueller Fokussierungsvorgang durchgeführt wird.

## Revendications

1. Appareil d'imagerie (C), comprenant :
un dispositif d'imagerie (101, 102) conçu pour convertir de manière photoélectrique une image d'un sujet photographique imagé par un système optique d'imagerie (7, 7-2a) et émettre des données image ;
un dispositif d'affichage (10, 117, 104-9) conçu pour afficher une image telle que vue à travers la lentille ;
un processeur de filtrage (104-2b) conçu pour extraire un composant haute fréquence de données de luminosité dans les données image et émettre des données de signal de bord ;
l'appareil d'imagerie étant **caractérisé en ce qu'**il comprend en outre :
un processeur de binarisation (104-2c) conçu pour binariser les données de signal de bord ;
un processeur de combinaison (104-2d) conçu pour combiner les données de signal de bord binarisées avec des données de différence de luminosité et de couleur à partir des données image ; et
un dispositif de commande d'affichage (104-3) conçu pour réaliser un premier affichage dans lequel lesdites données de signal de bord binarisées sont affichées sur le dispositif d'affichage, et conçu pour réaliser un deuxième affichage dans lequel lesdites données image combinées sont affichées sur le dispositif d'affichage, le dispositif de commande d'affichage étant en outre conçu pour obtenir des informations de contraste à partir des données image, et en fonction desdites informations de contraste, est conçu pour réaliser le premier affichage au cas où on détermine un contraste faible et pour réaliser le deuxième affichage au cas où on détermine un contraste élevé.

2. Appareil d'imagerie selon la revendication 1, dans lequel le dispositif de commande d'affichage permet d'obtenir les informations de contraste à partir des données image tout en réalisant une mise au point automatique, et permet de basculer entre le premier affichage et le deuxième affichage en fonction des informations de contraste obtenues tout en effectuant une mise au point manuelle après avoir effectué la mise au point automatique.

3. Appareil d'imagerie selon l'une quelconque des revendications 1 ou 2, dans lequel les informations de contraste représentent une valeur de contraste et le dispositif de commande d'affichage réalise le premier affichage au cas où une valeur de crête d'une forme d'onde, qui montre la valeur de contraste, est inférieure à une valeur prédéterminée, et au cas où la valeur de crête de la forme d'onde est plus élevée que la valeur prédéterminée, réalise le deuxième affichage.

4. Appareil d'imagerie selon l'une quelconque des revendications 1 ou 2, dans lequel les informations de contraste représentent une valeur de contraste et le dispositif de commande d'affichage réalise le premier affichage au cas où la raideur d'une longueur d'onde, qui montre la valeur de contraste, est inférieure à une valeur prédéterminée, et au cas où la raideur de la longueur d'onde est supérieure à la valeur prédéterminée, réalise le deuxième affichage.

5. Procédé de commande d'un appareil d'imagerie (C), comprenant : un dispositif d'imagerie (101, 102) conçu pour convertir de manière photoélectrique une image d'un sujet photographique imagé par un système optique d'imagerie (7, 7-2a) et émettre des données image ; un dispositif d'affichage (10, 117, 104-9) conçu pour afficher une image telle que vue à travers la lentille ; un processeur de filtrage (104-2b) conçu pour extraire un composant haute fréquence de données de luminosité dans les données image, et émettre des données de signal de bord ; un processeur de binarisation (104-2c) conçu pour binariser les données de signal de bord ; et un processeur de combinaison (104-2d) conçu pour combiner les données de signal de bord binarisées avec des données de différence de luminosité et de couleur à partir des données image,
le procédé de commande étant **caractérisé par** l'étape de réalisation d'une opération d'affichage comprenant un premier affichage dans lequel lesdites données de signal de bord binarisées sont affichées et un deuxième affichage dans lequel lesdites données image combinées sont affichées, en fonction des informations de contraste, au cas où on détermine qu'elle est d'un contraste faible, le premier affichage étant réalisé, et au cas où on détermine qu'elle est d'un contraste élevé, le deuxième affichage étant réalisé.

6. Procédé de commande selon la revendication 5, dans lequel dans l'opération d'affichage les informations de contraste sont obtenues à partir des données image, tout en effectuant une mise au point automatique, on bascule entre le premier affichage et le deuxième affichage en fonction des informations de contraste obtenues tout en effectuant une mise au point manuelle après avoir effectué la mise au point automatique.
